# FASCICULE DE BREVET EUROPEEN

(11) **EP 3 393 835 B1**
(45) Date de publication et mention de la délivrance du brevet: **06.11.2019**
(21) Numéro de dépôt: 16826119.6
(22) Date de dépôt: 20.12.2016
(51) Int. Cl.: B60K 11/08, F16H 25/16, F16H 27/06

(54) **DISPOSITIF D'OUVERTURE ET DE FERMETURE EN SÉQUENCE DE VOLETS D'AIR**
VORRICHTUNG ZUM SEQUENZIELLEN ÖFFNEN UND SCHLIESSEN VON LUFTKLAPPEN
DEVICE FOR SEQUENTIALLY OPENING AND CLOSING AIR FLAPS

(30) Priorité: 22.12.2015 FR 1563019
(43) Date de publication de la demande: 31.10.2018
(73) Titulaire: Compagnie Plastic Omnium, 69007 Lyon (FR)
(72) Inventeur: PARRA, Stéphane, 69120 Vaulx-En-Velin (FR); GILOTTE, Philippe, 01470 Benonces (FR)
(74) Mandataire: LLR
(86) Numéro de dépôt international: PCT/FR2016/053560
(87) Numéro de publication internationale: WO 2017/109371

(56) Documents cités:
- WO-A2-2012/158512
- "GENEVA MECHANISM", MACHINE DESIGN, PENTON MEDIA, CLEVELAND, OH, US, vol. 60, no. 24, 13 octobre 1988 (1988-10-13), page 100, XP000094453, ISSN: 0024-9114

## Description

L'invention a pour objet un dispositif mécanique de déploiement et de repli d'un ensemble de volets utilisés dans les véhicules automobiles, pour modifier les conditions d'entrée d'air dans un compartiment moteur et favoriser les échanges thermiques.

De manière commune, lorsque le moteur est disposé à l'avant du véhicule, une buse de guidage équipée d'un ou plusieurs volets est disposée en arrière de la calandre, ou derrière toute autre entrée d'air située sur le véhicule. En pivotant simultanément autour de leurs axes respectifs, les volets permettent de bloquer ou de laisser passer tout ou partie de l'air entrant vers la face avant du radiateur. Il est également possible, en jouant sur l'angle d'inclinaison des volets de réguler la quantité d'air servant à refroidir le moteur.

De préférence, ces dispositifs d'entrée d'air sont équipés d'une pluralité de volets de surface réduite, dans le but de répartir sur un plus grand nombre de volets les forces aérodynamiques s'exerçant sur la surface des volets lorsque le véhicule roule à grande vitesse, et de réduire l'espace libre nécessaire pour assurer leur débattement angulaire.

Les volets peuvent indifféremment être interposés entre le radiateur et les barreaux de la grille formant la calandre, ou participer au style général de la carrosserie et être visibles depuis l'extérieur du véhicule.

En position fermée des volets, le flux d'air ambiant arrivant sur le radiateur est très faible de manière à autoriser la montée et la stabilisation du régime thermique du moteur à la température de fonctionnement optimale. Lorsque la température du moteur excède un seuil donné, un mécanisme disposé en arrière de la calandre permet de piloter l'angle d'ouverture des volets en fonction des paramètres moteurs et de réguler le volume d'air entrant.

Ainsi, la publication FR 2 866 604 décrit un dispositif de régulation des moyens d'obturation qui sont réglables et ajustables en continu en fonction de la puissance appelée par le véhicule automobile.

La publication FR 2 967 945 décrit un dispositif de régulation d'un flux d'air, comprenant des volets aptes à se déformer et à tourner autour d'un axe de rotation sous l'action de moyens d'actionnement tels que des fibres polymères électroactives ou encore des vérins hydropneumatiques ou plus simplement des moteurs électriques affectés à la rotation de chacun des volets.

La publication WO 2007/130847 décrit un dispositif similaire au précédent dans lequel les volets sont pilotés par le déplacement produit par le changement d'état d'un matériau du type à mémoire de forme, un polymère électro actif, un matériau piezo électrique ou encore un matériau magnéto restrictif. Le changement d'état du matériau actif est piloté par un dispositif de commande électrique.

La publication FR 2 825 326 décrit un dispositif de ventilation moteur dans lequel les volets sont pilotés par un actionneur électromagnétique agissant sur une biellette commandant la rotation simultanée d'un ensemble de volets.

D'autres documents pertinents sont WO 2012/158512 A2 et "GENEVA MECHANISM", MACHINE DESIGN, PENTON MEDIA, CLEVELAND OH, US, vol. 60, no. 24, 13 octobre 1988 (1988-10-13), page 100.

Tous ces dispositifs permettent de réguler et d'ajuster en continu le volume d'air admis à l'entrée du système de refroidissement du véhicule. Ils présentent toutefois l'inconvénient de devoir maintenir l'actionneur sous une tension électrique donnée pour maintenir les volets dans la position désirée. Cette tension électrique est d'autant plus élevée que la force aérodynamique appliquée sur les volets lorsque le véhicule roule à grande vitesse est grande. Il en résulte une consommation d'énergie importante et non désirée.

L'invention a pour objet de limiter l'inconvénient évoqué ci-dessus.

Il est ainsi proposé un dispositif de manœuvre d'une pluralité de volets, pivotant chacun autour d'un axe, et destinés à être disposés en avant d'un moyen de refroidissement d'un véhicule automobile. Ce dispositif de manœuvre se caractérise en ce qu'il comprend des moyens mécaniques comportant une roue d'entrainement, animée en rotation autour d'un axe principal, une des faces du disque formé par la roue d'entrainement supportant en surélévation un disque de blocage circulaire de diamètre inférieur et de même axe de rotation que la roue d'entrainement. Le dispositif de manœuvre comporte en outre une pluralité de basculeurs articulés librement chacun autour d'un axe secondaire parallèle à l'axe principal et reliés par des moyens mécaniques de transmission à un ou plusieurs volets, lesdits basculeurs comprenant au moins deux découpes semi-circulaires ayant un rayon égal au rayon du disque de blocage et qui sont arrangées pour que, lorsqu'un basculeur est placé dans une position, le centre d'une découpe semi-circulaire est disposé sur l'axe principal, de sorte que le disque de blocage engage ladite découpe semi-circulaire et bloque ledit basculeur dans ladite position.

Lors de l'arrêt de la rotation de la roue d'entrainement dans une position quelconque les basculeurs sont maintenus par le disque de blocage chacun dans la position qu'il occupe à cet instant du cycle et, comme on le verra par la suite, sans qu'il soit besoin de maintenir en tension le moteur animant la roue d'entrainement en rotation.

En indexant le dispositif de manœuvre à des positions données en fonction de paramètres moteurs prédéterminés, par exemple la température du moteur, il devient possible de ne laisser entrer que le seul flux d'air nécessaire au refroidissement du moteur. L'ouverture ou la fermeture d'un volet supplémentaire permet d'augmenter ou de réduire ce flux, et de réguler par gradations successives le débit d'air.

Le dispositif de manœuvre selon l'invention peut aussi comprendre isolément, ou en combinaison, les caractéristiques suivantes :
- Les découpes semi-circulaires sont placées sur un bord périphérique du basculeur.
- La roue d'entrainement supporte une broche axiale disposée sur la même face du disque formé par la roue d'entrainement supportant le disque de blocage, à une distance de l'axe principal supérieure au rayon du disque de blocage.
- Chaque basculeur comprend des fentes radiales disposées entre deux découpes semi-circulaires adjacentes, dans lesquelles circule ladite broche pour faire pivoter un basculeur d'une position à une autre position adjacente à la précédente autour de son axe secondaire.
- Le disque de blocage comporte un évidement disposé radialement au droit de la broche, de manière à autoriser le pivotement d'un basculeur lorsque ce dernier change de position.
- Les moyens mécaniques de transmission reliant un basculeur à un ou plusieurs volets sont formés par :
   ∘ un jeu de biellettes reliant le corps du basculeur à l'axe de rotation ou à une face arrière du ou des volets,
   ∘ une transmission par câble flexible de type poussé/tiré,
   ∘ un système d'engrenages.
- Chaque basculeur occupe successivement un nombre de positions fixes égal au nombre d'évidements semi--circulaires qu'il supporte, de sorte qu'il est possible de disposer successivement les volets dans une pluralité de positions fixes déterminées pour ajuster la quantité d'air arrivant sur le moyen de refroidissement.
- Lorsque la roue d'entrainement effectue une rotation d'un tour, chacun des basculeurs effectue, selon une séquence imposée par le sens de rotation de la roue d'entrainement un mouvement de rotation d'une position à une autre position adjacente à la précédente.
- Chaque basculeur occupe successivement chacune des positions possibles lorsque la roue d'entrainement a effectué autant de tours sur elle-même que le nombre de fentes radiales supportées par un basculeur.
- Lorsqu'un basculeur est placé dans une position, le couple appliqué sur l'axe de rotation principal, et résultant des forces aérodynamiques s'exerçant sur le ou les volets reliés audit basculeur lorsque le véhicule est en mouvement, est sensiblement nul.
- La roue d'entrainement est mise en rotation sous l'action d'un moteur couplé à un motoréducteur.
- La rotation de la roue d'entrainement peut être interrompue entre le changement de position de deux basculeurs placés circonférentiellement dans des positions adjacentes, de sorte qu'une partie des volets est dans une position différente de la position d'une autre partie.

L'invention sera mieux comprise à la lecture des figures annexées, qui sont fournies à titre d'exemples et ne présentent aucun caractère limitatif, dans lesquelles :
- La figure 1 est une vue en perspective d'un dispositif de manœuvre selon l'invention.
- La figure 2 représente, en vue de dessus, les moyens mécaniques du dispositif de manœuvre illustré à la figure 1.
- Les figures 2a et 2b représentent des alternatives de réalisation du basculeur formant partie des moyens mécaniques.
- La figure 3 est une vue en perspective du dispositif de manœuvre, dans lequel un volet est passé de la position fermée à la position ouverte.
- Les figures 3a, 3b, 3c illustrent les principales phases du mouvement des moyens mécaniques pour faire passer le dispositif de manœuvre de l'état illustré à la figure 1 à l'état illustré à la figure 3**.**
- La figure 4 est une vue en perspective du dispositif de manœuvre dans lequel tous les volets sont en position ouverte.
- Les figures 4a, 4b, 4c illustrent les principales phases du mouvement des moyens mécaniques pour faire passer le dispositif de manœuvre de l'état illustré à la figure 3 à l'état illustré à la figure 4**.**
- La figure 5 représente en vue de dessus, une alternative de réalisation des moyens mécaniques.
- Les figures 5a, 5b, 5c, 5d, 5e, 5f, 5g, 5h, 5i et 5j illustrent les principales phases du mouvement des moyens mécaniques représentés à la figure 5.

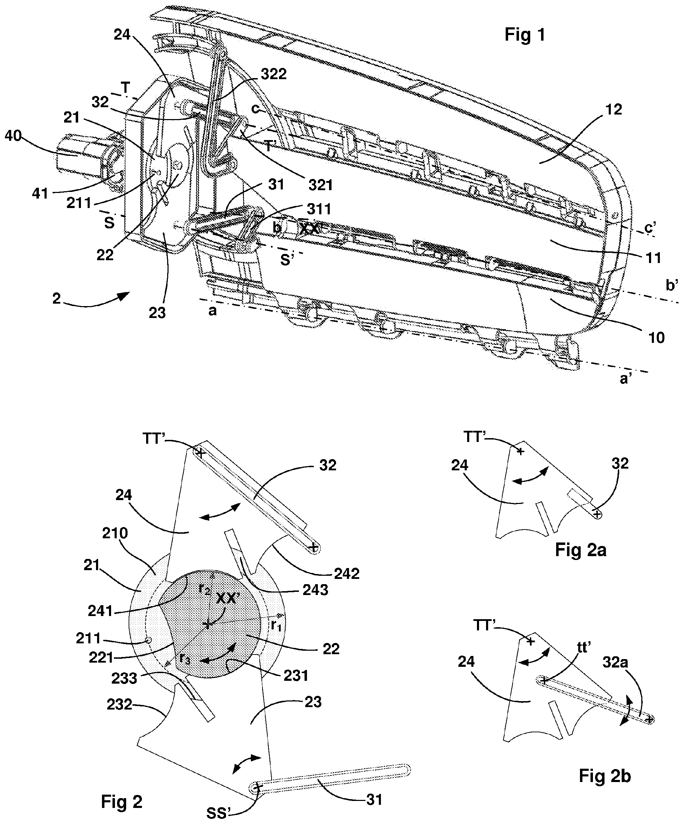

Le dispositif de manœuvre illustré la figure 1, comprend trois volets 10, 11, 12, dont l'ouverture ou la fermeture commande l'entrée d'un flux d'air destiné à venir refroidir un moteur (non représenté) d'un véhicule automobile, lorsque le véhicule est en mouvement.

Les volets 10, 11 et 12 sont articulés respectivement autour des axes aa', bb' et cc'. Ces axes ne sont pas nécessairement parallèles entre eux.

Les moyens mécaniques 2 comprennent une roue d'entrainement animée en rotation autour d'un axe principal XX' par un moteur 40 accouplé à un motoréducteur 41.

Des basculeurs, ici au nombre de deux, respectivement 23 et 24, sont articulés librement en rotation chacun autour d'un axe de rotation secondaire, respectivement SS' et TT'. Les axes de rotation secondaires SS' et TT' sont parallèles à l'axe de rotation principal XX'.

La rotation des basculeurs autour de leurs axes de rotation secondaire respectifs commande le mouvement des volets.

Ainsi, le basculeur 23 est relié au volet 10 par une biellette 31 fixée, dans la forme d'exécution servant de base à la présente description, sur le basculeur 23. La biellette 31 et le basculeur 23 pourraient donc former une seule et même pièce pivotant autour de l'axe SS'.

La biellette 31 est reliée au volet 10 par une deuxième biellette 311.

Le basculeur 24 supporte une biellette 32, également fixée sur le basculeur 24. La biellette 32 et le basculeur 24 pourraient donc aussi former une seule et même pièce pivotant autour de l'axe de rotation secondaire TT'.

La biellette 32 est reliée à une biellette 321 articulée sur le volet 11. Le volet 12 est relié au volet 11 par une biellette 322. Le mouvement en rotation du basculeur 24 permet de mettre en mouvement les volets 11 et 12 de manière simultanée.

On observera ici que la mise en rotation des volets autour de leurs axes par les basculeurs peut être assurée par tout autres moyens mécanique de transmission tels que, par exemple, des jeux d'engrenages, ou encore par des câbles flexibles de type poussé/tiré.

La figure 2 permet d'illustrer plus en détail les organes formant les moyens mécaniques du dispositif de manœuvre.

La roue d'entrainement 21 supporte sur une de ses faces 210 un disque de blocage 22. Ce disque de blocage a un rayon r₂ inférieur au rayon r₁ de la roue d'entrainement 21.

Chaque basculeur comporte à sa périphérie une pluralité de découpes semi-circulaires de forme concave, ici au nombre de deux découpes semi-circulaires par basculeur. Le nombre de découpe semi-circulaires est en règle générale identique sur chacun des basculeurs. Le basculeur 23 comprend deux découpes semi-circulaires 231 et 232, et le basculeur 24 comprend deux découpes semi-circulaires 241 et 242. Ces découpes semi-circulaires ont un rayon r₂, identique au rayon du disque de blocage 22.

Les axes de rotation secondaires SS' et TT' sont disposés de sorte que lorsqu'un basculeur est dans une position angulaire donnée le centre d'une découpe semi-circulaire est disposé sur l'axe principal XX'. Il en résulte que la couronne du disque de blocage engage la découpe semi-circulaire du basculeur qui vient prendre appui sur le disque de blocage. Le basculeur est bloqué en rotation par le disque de blocage 22, et reste maintenu dans cette position pendant la rotation de la roue d'entrainement et du disque de blocage. Chaque basculeur peut donc occuper autant de positions que de découpes semi-circulaires qu'il supporte, ce qui, dans l'exemple illustré à la figure 2**, se** limite à deux positions, correspondant à la position fermée et à la position ouverte des volets.

La figure 2 illustre le cas dans lequel la découpe semi-circulaire 231 du basculeur 23 et la découpe semi-circulaire 341 du basculeur 24 sont engagées par le disque de blocage 22. Les basculeurs 23 et 24 sont alors maintenus dans leurs positions respectives par le disque de blocage 22.

On observera alors que les efforts exercés par le flux d'air sur les volets 10, 11 et 12 et transmis sous forme de couple par les biellettes aux basculeurs forment un couple résultant égal à zéro autour de l'axe XX', et qu'il n'est plus nécessaire d'exercer un couple moteur particulier pour maintenir les basculeurs en position.

La roue d'entrainement 21 supporte également une broche axiale 211 s'étendant axialement depuis la face 210 supportant le disque de blocage 22. La broche axiale 211 est disposée à une distance r₃ de l'axe XX' supérieure au rayon r₂ du disque de blocage 22.

Chaque basculeur comporte une ou plusieurs fentes radiales, respectivement 233, 243 disposées chacune entre deux découpes semi-circulaires adjacentes. La fente radiale 233 du basculeur 23 est disposée entre les découpes semi-circulaires 231 et 232, et la fente radiale 243 du basculeur 24 est disposée entre les découpes semi-circulaires 241 et 242.

La rotation d'un basculeur autour de son axe s'opère en mettant la roue d'entrainement en rotation. La broche axiale 211 s'engage alors dans la fente radiale du basculeur et entraine ce dernier en rotation autour de son axe de rotation secondaire.

Un évidement 221 est pratiqué dans le disque de blocage au droit de la broche axiale pour autoriser la rotation et le changement de position du basculeur. En poursuivant la rotation de la roue d'entrainement, la broche axiale 211 ressort de la fente radiale, et le disque de blocage engage la découpe semi-circulaire suivante correspondant à la position suivante dans laquelle le basculeur est immobilisé pendant la poursuite de la rotation de la roue d'entrainement.

La figure 2a illustre le cas dans lequel, lorsqu'une biellette, telle que la biellette 32, est bloquée en rotation par rapport au basculeur, elle peut éventuellement former avec ce dernier une pièce unique. Dans ce cas l'axe de rotation de la biellette est confondu avec l'axe de rotation secondaire autour duquel le basculeur est articulé.

La figure 2b illustre le cas dans lequel la biellette 32a est articulée sur le basculeur 24 par une rotule d'axe tt'.

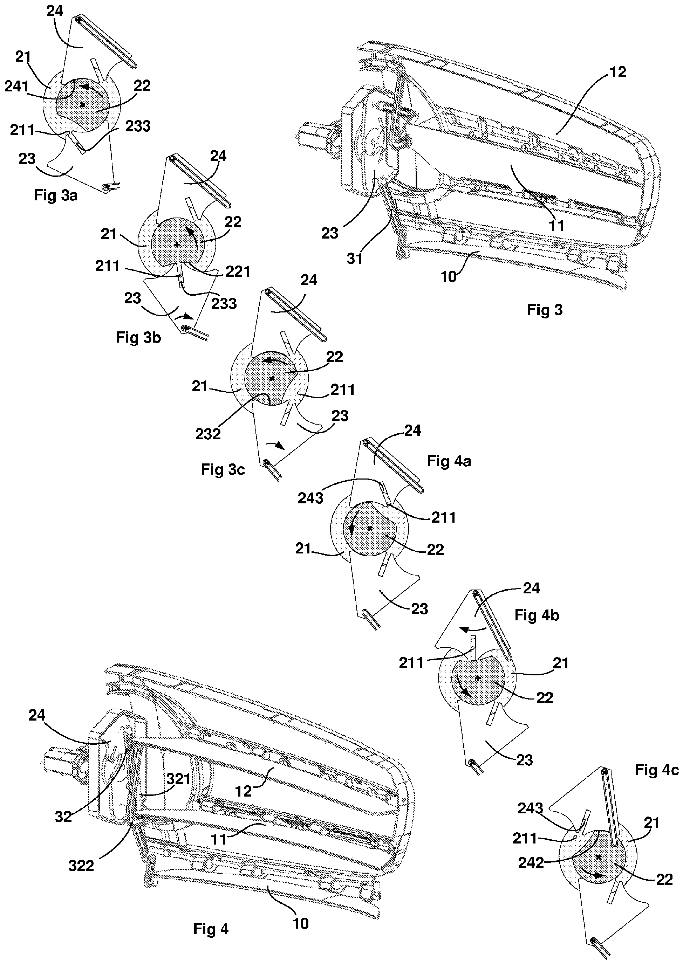

La figure 3 illustre le cas dans lequel le volet 10 est passé de la position fermée telle que représentée à la figure 1 à la position ouverte. Les volets 11 et 12 sont en position fermée.

Le basculeur 23 a changé de position en suivant les étapes illustrées aux figures 3a, 3b et 3c.

Lorsque la roue d'entrainement est mise en rotation, la broche 211 pénètre dans la fente radiale 233 comme cela est représenté à la figure 3a. Le disque de blocage est engagé dans la découpe semi-circulaire 241 et maintient le basculeur 24 en position.

Le basculeur 23 est entrainé en rotation par la broche 211, comme cela est représenté à la figure 3b. L'évidement 221 libère l'espace permettant la rotation du basculeur 23 autour de son axe de rotation secondaire.

En poursuivant la mise en rotation de la roue d'entrainement 21 (figure 3c), la broche axiale 211 sort de la fente radiale 233 et le disque de blocage 22 engage la découpe semi-circulaire 232, privant ainsi le basculeur 23 de la possibilité de se mouvoir autour de son axe de rotation secondaire.

Le mouvement du basculeur 23 entraine la rotation de la biellette 31 agissant sur le volet 10, qui passe de la position fermée à la position ouverte.

Lorsque l'on désire accroitre le volume d'air extérieur pénétrant dans le compartiment moteur, on procède à l'ouverture de volets supplémentaires. La figure 4 illustre le cas dans lequel les volets 11 et 12 sont ouverts.

Pour effectuer ce mouvement on met de nouveau la roue d'entrainement en rotation. La broche 211 pénètre dans la fente radiale 243 et entraine le basculeur 24 en rotation autour de son axe de rotation secondaire. L'évidement 211 est alors situé au droit de la fente radiale 243 et libère l'espace permettant au basculeur 24 de changer de position, comme cela est illustré à la figure 4b.

En poursuivant la rotation de la roue d'entrainement, la broche 211 libère la fente radiale 243. Le disque de blocage 22 engage la découpe semi-circulaire 242 et immobilise le basculeur 24 dans cette nouvelle position. La rotation du basculeur 24 entraine les biellettes 32, 321 et 323 et l'ouverture des volets 11 et 12.

On remarquera ici que, lorsque la roue d'entrainement 21 a effectué un parcours angulaire de 360°, les deux basculeurs ont changé de position et ont entrainé l'ouverture complète des volets.

La fermeture des volets s'effectue en faisant tourner la roue d'entrainement en sens inverse, et en parcourant dans l'ordre les étapes illustrées aux figures 4c, 4b et 4a**,** pour fermer les volets 11 et 12, et les étapes illustrées aux figures 3c, 3b et 3a pour fermer le volet 10.

Le changement de position des basculeurs se fait selon une séquence déterminée. Et le changement de position d'un basculeur se fait lorsque les autres basculeurs sont immobilisés dans leurs positions respectives par le disque de blocage.

Il en résulte que le couple moteur engendré par le moteur 40 pour entrainer la roue 21 en rotation est limité au seul couple nécessaire pour faire tourner le basculeur commandant le mouvement du ou des volets qui lui sont reliés de la position fermée à la position ouverte et vice versa. Une fois le mouvement réalisé, il n'est plus besoin d'alimenter le moteur 40 pour maintenir les volets dans la position désirée.

Bien évidement la forme de réalisation d'un dispositif de manœuvre selon l'invention n'est pas limitée à ce qui a été décrit précédemment.

Il est en effet possible, dans la limite de l'espace disponible autour de la roue d'entrainement, d'augmenter le nombre de basculeurs, et de prévoir des basculeurs pouvant occuper plus de deux positions. Cette configuration peut présenter un intérêt particulier lorsque l'on cherche à augmenter le nombre de volets pour réduire la puissance nécessaire pour faire passer un volet d'une position à une autre, ou diminuer le volume nécessaire au débattement des volets, mais également lorsque l'on cherche à moduler de façon plus fine le flux d'air entrant dans le compartiment moteur.

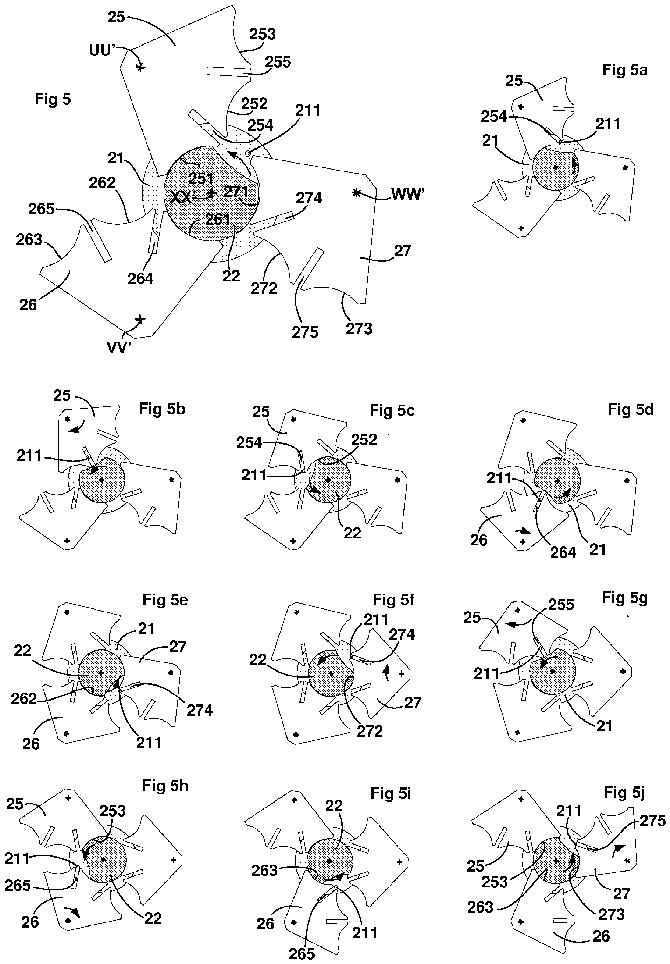

La figure 5 représente, de manière non limitative, une alternative de construction dans laquelle, la roue d'entrainement 21 est entourée de trois basculeurs, respectivement 25, 26, 27 articulés chacun autour d'un axe de rotation secondaire respectivement UU', W' et WW' parallèles à l'axe principal XX'. Chaque basculeur comprend trois découpes semi-circulaires respectivement 251, 252, 253, 261, 262, 263 et 271, 272, 273, et peut donc occuper trois positions différentes.

Une fente radiale, respectivement 254, 255, 264, 265, 274, 275, est intercalée entre chaque paire de découpes semi-circulaires adjacentes, ce qui amène le nombre de fentes radiales par basculeur à deux.

Les basculeurs 25 26 et 27 de la figure 1 sont immobilisés chacun dans une première position par le disque de blocage 211.

Les figures 5a à 5j permettent d'illustrer la cinématique des basculeurs lorsque la roue d'entrainement 21 est mise en rotation :
- Figure 5a : la broche axiale pénètre dans la fente radiale 254 du basculeur 25.
- Figure 5b : le basculeur 25 effectue une rotation autour de son axe de rotation secondaire.
- Figure 5c : le disque de blocage engage la découpe semi-circulaire du basculeur 25, et la broche axiale 211 ressort de la fente radiale 254. Le basculeur 25 est alors immobilisé dans une deuxième position.
- Figure 5d : la broche 211 est engagée dans la fente radiale 264 du basculeur 26 et entraine ce dernier en rotation autour de son axe secondaire.
- Figure 5e : le basculeur 26 est maintenu dans une seconde position par le disque de blocage, et la broche axiale 211 s'engage dans la fente radiale 274 du basculeur 27 pour entrainer ce dernier en rotation autour de son axe secondaire.
- Figure 5f : le disque de blocage 22 s'engage dans la découpe semi-circulaire 272 du basculeur 27 pour immobiliser ce dernier dans une seconde position, et la broche axiale 211 ressort de la fente radiale. A ce stade, la roue d'entrainement 21 a effectué un premier tour autour de l'axe principal.
- Figure 5g : la broche axiale 211 est engagée dans la fente radiale 255 du basculeur 25 pour faire tourner ce dernier autour de son axe secondaire.
- Figure 5h : le disque de blocage immobilise le basculeur 25 dans une troisième position. La broche axiale s'engage dans la fente radiale 265 du basculeur 26.
- Figure 5i : Le disque de blocage 22 s'engage dans la découpe semi-circulaire 263 du basculeur 26 pour bloquer ce dernier dans une troisième position.
- Figure 5j : le basculeur 27 achève sa rotation autour de son axe de rotation secondaire et la broche axiale 211 ressort de la fente radiale 275. Le disque de blocage engage la découpe semi-circulaire 273 et immobilise le basculeur 27 dans sa troisième position. A ce stade, la roue d'entrainement a effectué un deuxième tour.

Lorsque la roue d'entrainement a effectué ces deux tours, correspondant au nombre de fentes radiales supportées par chacun des basculeurs, chacun desdits basculeurs a occupé l'ensemble des trois positions possibles correspondant aux trois découpes semi-circulaires pratiquées à leurs périphéries.

La fermeture des volets s'effectue en faisant tourner la roue d'entrainement dans l'autre sens, et en réalisant la séquence décrite ci-dessus dans l'ordre inverse.

On observe là encore que le changement de position d'un basculeur s'effectue lorsque les autres basculeurs sont immobilisés dans leurs positions respectives, ce qui permet de réduire le couple moteur pour mettre la roue d'entrainement en rotation au couple nécessaire pour effectuer le changement de position d'un seul basculeur.

La séquence d'ouverture et de fermeture des volets s'opère selon l'ordre de positionnement des basculeurs autour de l'axe principal XX'.

D'autres variantes peuvent être également envisagées dans lesquelles, par exemple, la roue d'entrainement supporte deux disques de blocage disposés sur chacune des faces du disque formé par la roue d'entrainement. Les basculeurs sont alors placés de part et d'autre de la roue d'entrainement. Cette variante permet de résoudre des problèmes d'encombrement ou d'augmenter le nombre de volets pouvant être actionnés par les moyens mécaniques.

### NOMENCLATURE

10 Volet pivotant.
11 Volet pivotant.
12 Volet pivotant.
2 Moyens mécaniques.
21 Roue d'entrainement.
211 Broche axiale.
210 Face de la roue d'entrainement supportant le disque de blocage.
22 Disque de blocage.
221 Evidement
23, 24, 25, 26, 27 Basculeurs.
231, 232, 241, 242, 251,252, 253, 261, 262, 263, 271, 272, 273, Découpes semi-circulaires.
233, 243, 254, 255, 264, 265, 274, 275 Fentes radiale.
31, 311, 32, 32a, 321, 322 Moyens mécaniques de transmission ; Biellettes.
40 Moteur.
41 Motoréducteur.
aa' Axe de pivotement du volet 10.
bb' Axe de pivotement du volet 11.
cc' Axe de pivotement du volet 12.
r1 Rayon de la roue d'entrainement.
r3 Distance de la broche axiale à l'axe principal XX'.
r2 Rayon du disque de blocage.
SS' Axe de rotation secondaire du basculeur 23.
TT' Axe de rotation secondaire du basculeur 24.
UU' Axe de rotation secondaire du basculeur 25
W' Axe de rotation secondaire du basculeur 26
WW' Axe de rotation secondaire du basculeur 27
tt' Axe de rotation de la biellette 32a sur le basculeur 24.
XX' Axe principal.

## Revendications

1. Dispositif de manœuvre d'une pluralité de volets (10, 11, 12), pivotant chacun autour d'un axe (aa', bb', cc'), et destinés à être disposés en avant d'un moyen de refroidissement d'un véhicule automobile **caractérisé en ce qu'**il comprend des moyens mécaniques (2) comportant une roue d'entrainement (21), animée en rotation autour d'un axe principal (XX'), une des faces (210) du disque formé par la roue d'entrainement (21) supportant en surélévation un disque de blocage (22) circulaire de diamètre inférieur et de même axe de rotation que la roue d'entrainement (21), le dispositif de manœuvre comportant en outre une pluralité de basculeurs (23, 24, 25, 26, 27), articulés librement chacun autour d'un axe secondaire (SS', TT', UU', W', WW') parallèle à l'axe principal (XX') et reliés par des moyens mécaniques de transmission (31, 311, 32, 32a, 321, 322) à un ou plusieurs volets (10, 11, 12), lesdits basculeurs comprenant au moins deux découpes semi-circulaires (231, 232, 241, 242, 251,252, 253, 261, 262, 263, 271, 272, 273) ayant un rayon égal au rayon (r₂) du disque de blocage (22) et qui sont arrangées pour que, lorsqu'un basculeur est placé dans une position, le centre d'une découpe semi-circulaire est disposé sur l'axe principal (XX'), de sorte que le disque de blocage (22) engage ladite découpe semi-circulaire et bloque ledit basculeur dans ladite position.

2. Dispositif de manœuvre selon la revendication 1, dans lequel les découpes semi-circulaires (231, 232, 241, 242, 251,252, 253, 261, 262, 263, 271, 272, 273) sont placées sur un bord périphérique du basculeur (23, 24, 25, 26, 27).

3. Dispositif de manœuvre selon l'une des revendications 1 ou 2, dans lequel la roue d'entrainement (22) supporte une broche axiale (211) disposée sur la même face (210) du disque formé par la roue d'entrainement supportant le disque de blocage (22), à une distance de l'axe principal (r₃) supérieure au rayon (r₂) du disque de blocage.

4. Dispositif de manœuvre selon la revendication 3, dans lequel chaque basculeur (23, 24, 25, 26, 27) comprend des fentes radiales (233, 243, 254, 255, 264, 265, 274, 275 disposées entre deux découpes semi--circulaires adjacentes, dans lesquelles circule ladite broche (211) pour faire pivoter un basculeur d'une position à une autre position adjacente à la précédente autour de son axe secondaire (SS', TT', UU', W', WW').

5. Dispositif de manœuvre selon la revendication 3 ou la revendication 4, dans lequel le disque de blocage (22) comporte un évidement (221) disposé radialement au droit de la broche (211), de manière à autoriser le pivotement d'un basculeur lorsque ce dernier change de position.

6. Dispositif de manœuvre selon l'une des revendications 1 à 5, dans laquelle les moyens mécaniques de transmission reliant un basculeur à un ou plusieurs volets sont formés par :
- un jeu de biellettes (31, 311, 32, 32a, 321, 322) reliant le corps du basculeur à l'axe de rotation ou à une face arrière du ou des volets,
- une transmission par câble flexible de type poussé/tiré,
- un système d'engrenages.

7. Dispositif de manœuvre selon l'une des revendications 1 à 6, dans lequel chaque basculeur (23, 24, 25, 26, 27) occupe successivement un nombre de positions fixes égal au nombre d'évidements semi--circulaires (231, 232, 241, 242, 251,252, 253, 261, 262, 263, 271, 272, 273) qu'il supporte, de sorte qu'il est possible de disposer successivement les volets (10, 11, 12) dans une pluralité de positions fixes déterminées pour ajuster la quantité d'air arrivant sur le moyen de refroidissement.

8. Dispositif de manœuvre selon l'une des revendications 1 à 7, dans lequel, lorsque la roue d'entrainement (21) effectue une rotation d'un tour, chacun des basculeurs (23, 24, 25, 26, 27) effectue, selon une séquence imposée par le sens de rotation de la roue d'entrainement un mouvement de rotation d'une position à une autre position adjacente à la précédente.

9. Dispositif de manœuvre selon l'une des revendications 1 à 8, dans lequel chaque basculeur (23, 24, 25, 26, 27) occupe successivement chacune des positions possibles lorsque la roue d'entrainement (21) a effectué autant de tours sur elle-même que le nombre de fentes radiales supportées par un basculeur.

10. Dispositif de manœuvre selon l'une des revendications 1 à 9, dans lequel, lorsqu' un basculeur (23, 24, 25, 26, 27) est placé dans une position, le couple appliqué sur l'axe de rotation principal (XX'), et résultant des forces aérodynamiques s'exerçant sur le ou les volets (1°, 11, 12) reliés audit basculeur lorsque le véhicule est en mouvement, est sensiblement nul.

11. Dispositif de manœuvre selon l'une des revendications 1 à 10, dans lequel la roue d'entrainement (21) est mise en rotation sous l'action d'un moteur (40) couplé à un motoréducteur (41).

12. Dispositif selon l'une des revendications 1 à 11, dans lequel la rotation de la roue d'entrainement (21) peut être interrompue entre le changement de position de deux basculeurs (23, 24, 25, 26, 27) placés circonférentiellement dans des positions adjacentes, de sorte qu'une partie des volets est dans une position différente de la position d'une autre partie.

13. Dispositif selon l'une des revendications 1 à 12, disposé en avant d'un moyen de refroidissement d'un véhicule automobile.

## Patentansprüche

1. Vorrichtung zur Betätigung einer Vielzahl von Klappen (10, 11, 12), wobei jede der Klappen um die Achse (aa', bb', cc') schwenkt und dazu bestimmt ist, vor einem Kühlmittel eines Kraftfahrzeuges angeordnet zu sein, **dadurch gekennzeichnet, dass**, sie mechanische Mittel (2) umfasst, die ein Antriebsrad (21) umfassen, das um eine Hauptachse (X, X') zum Drehen gebracht wird, wobei eine der Seiten (210) der Scheibe, die durch das Antriebsrad (21) gebildet ist, wobei eine kreisförmige Blockierungsscheibe (22) mit einem kleineren Durchmesser und mit einer selben Drehachse wie das Antriebsrad (21) gebildet ist, wobei die Vorrichtung zum Betätigen eine Vielzahl von Kippen (23, 24, 25, 26, 27) die jede frei um eine zweite Achse (S S'), (T T'), (U, U') parallel zur Hauptachse (X X') artikuliert sind und durch mechanische Übertragungsmittel (31, 311, 32, 32a, 321, 322) mit einer oder mehreren Klappen (10, 11, 12) verbunden sind, wobei die genannten Kippen, die mindestens zwei halbkreisförmige Schnitte (231, 232, 241, 242, 251, 252, 253,261, 263, 271, 272, 273) einen Radius aufweisen, der gleich (r2) der Blockierungsscheibe (22) aufweisen, und die so angeordnet sind damit wenn eine Kippe in einer Position angeordnet ist das Zentrum eines halbkreisförmigen Schnittes auf der Hauptachse (X X4) damit die Blockierungsscheibe (22) in den genannten halbkreisförmigen Schnitt eingreift und die genannte Kippe in der genannten Position blockiert. Hauptachse (X und X') angeordnet ist, damit die Blockierungsscheibe 22 in den genannten halbkreisförmigen Aufschnitt greift und die genannte Kippe in dieser Position blockiert.

2. Vorrichtung zur Betätigung nach dem Anspruch 1, bei der die halbkreisförmigen Schnitte (231, 232, 241, 242, 251, 252, 253, 261, 262, 263, 271, 272, 273) am Rand des Umfangs der Kippe (23, 24, 25, 26) angeordnet sind.

3. Vorrichtung zur Betätigung nach einem der Ansprüche 1 oder 2, bei der das Antriebsrad (22) eine axiale Spindel (211) trägt, die auf derselben Seite (210) über die Scheibe verfügt, die durch das Antriebsrad gebildet worden ist, das die Blockierungsscheibe (22) entfernt von der oberen Hauptachse (r3) auf dem Radius r2 getragen wird.

4. Vorrichtung zur Betätigung nach dem Anspruch 3, bei der jede Kippe (23, 24, 25, 26,27) radiale Schlitze (233, 243, 254, 255, 264, 265, 274, 275) umfasst, die zwischen zwei einander liegenden halbkreisförmigen Schnitten angeordnet sind in denen sich die genannte Spindel (211) bewegt, damit eine Kippe von einer Position zu einer anderen anliegenden Position zu der vorhergehenden um ihre zweite Achse (S S', T T', U U', V V', W W') geschwenkt wird.

5. Vorrichtung zur Betätigung nach dem Anspruch 3 oder dem Anspruch 4, bei der die Blockierungsscheibe (22) eine Ausnehmung (221) umfasst, die radial zum rechten Winkel zum Spindel (211) angeordnet ist, damit das Schwenken einer Kippe ermöglicht wird wenn letzterer die Position ändert.

6. Vorrichtung zur Betätigung nach einem der Ansprüche 1 bis 5, bei der mechanische Übertragungsmittel, die eine Kippe mit einer oder mehreren Klappen verbunden sind geformt durch :
- mehrere Schwingarme (31, 311, 32, 32a, 321, 322),die den Körper der Kippe mit der Drehachse oder einer hinteren Seite mit der oder den Klappen verbinden
- eine Übertragung mit einem flexiblen Kabel vom Typ Schub/Zug
- Ein Verzahnungssystem.

7. Vorrichtung zur Betätigung nach einem der Ansprüche 1 bis 6, bei der jede Kippe (23, 24, 25, 26, 27) nach einander eine Anzahl von festen Positionen mit einer Anzahl von halbförmigen Ausnehmungen (231, 232, 241, 242, 251, 252, 253, 261, 262, 263, 271, 272, 273), einnimmt, damit es möglich ist nacheinanderfolgend über die Klappen (10, 11, 12) in einer Vielzahl von bestimmten Positionen zu verfügen damit mehrere feste Positionen bestimmt sind, damit die Menge der Luft, die das Kühlmittel erreicht ausreicht.

8. Vorrichtung zur Betätigung nach dem Anspruch 1 bis 7, in der, wenn das Antriebsrad (21) eine Umdrehung ausführt, jede der Kippen (23, 24, 25, 26, 27) führt nach einer Sequenz, die durch die Drehrichtung des Antriebsrades eine Drehbewegung von einer Position bis zu einer angrenzenden vorhergehenden ausführt.

9. Vorrichtung zur Betätigung nach den Ansprüchen 1 bis 8, bei der jede Kippe (23, 24, 25, 26, 27) nacheinanderfolgend jede der möglichen Positionen einnimmt, wenn das Antriebsrad (21) so viele Umdrehungen um sich selber ausgeführt wie die Anzahl der radialen Schlitze für eine Kippe.

10. Vorrichtung zur Betätigung nach einem der Ansprüche 1 bis 9 bei der, wenn eine Kippe (23,24,25,26,27) in einer Position platziert ist, dann ist das Drehmoment, das auf die Hauptdrehachse (X X') angewendet wird und sich aus den aerodynamischen Kräften ergibt, die auf die Kippe oder die Kippen (10, 11, 12) ausgeübt werden, die mit den sogenannten Kippen verbunden sind wenn sich das Fahrzeug bewegt, im wesentlichen Null.

11. Vorrichtung zur Betätigung nach einer der Ansprüche 1 bis 10 bei der das Antriebsrad (21) unter der Wirkung eines Motors (41) in Drehung gebracht wird, der an einem Reduktionsmotor (41) gekoppelt ist.

12. Vorrichtung zur Betätigung nach einem der Ansprüche 1 bis 11, bei der die Drehung des Antriebsrades (21) zwischen der Änderung der Position der beiden Kippen (23, 24, 25, 26, 27) in angrenzenden Positionen auf dem Umfang angeordnet werden damit ein Teil der Klappen sich in unterschiedlichen Positionen eines anderen Teils befinden.

13. Vorrichtung nach einer der Ansprüche 1 bis 12, die sich vor einem Abkühlmittel eines Kraftfahrzeuges angeordnet ist.

## Claims

1. A device for maneuvering a plurality of flaps (10, 11, 12), each pivoting about an axis **(aa', bb', cc'), and intended to be placed in front of cooling means of a motor vehicle wherein** the device comprises mechanical means(2) including a drive wheel (21), driven in rotation **about a main axis (XX'), one of the faces (210) of the disc formed by the drive wheel (21)** supporting in a raised position a circular locking disc (22) with a diameter smaller than and the same rotation axis as the drive wheel (21), the maneuvering device further including a plurality of rockers (23, 24, 25,26,27), each freely articulated about a secondary axis **(SS', TT', U).U', VV', WW') parallel to the main axis (XX') and connected by mechanical transmission** means (31, 311, 32, 32a, 321, 322) to one or more flaps (10, 11, 12), said rockers comprising at least two semicircular cutouts (231, 232, 241, 242, 252, 252, 253, 261, 262, 271, 272, 273) having a radius equal to the radius (r2) of the locking disc (22) and which are arranged so that, when a rocker is placed in one position, a center of a semicircular cutout is placed on **the main axis (XX'), so that the locking disc (22) engages with said semicircular cutout and** locks said rocker in said position

2. The maneuvering device as claimed in claim 1, in which the semicircular cutouts (231, 232, 241, 242, 251, 252, 253, 261, 262, 263, 271, 272, 273) are placed on a peripheral edge of the rocker (23, 24, 25, 26,27).

3. The maneuvering device as claimed in either one of claims1 or 2, in which the drive wheel (22) supports an axial shaft (211) disposed on the same face (210) of the disk formed by the drive wheel supporting the locking disk (22), at a distance from the main axis (r3) greater than the radius (r2)-of the_locking disk (22).

4. The maneuvering device as claimed in claim 3, in which each rocker (23, 24, 25, 26, 27) comprises radial slots (233, 243, 254, 255, 264, 265, 274, 275) disposed between two adjacent semicircular cutouts, in which said shaft (211) circulates to cause a rocker to pivot from one position to another position adjacent the preceding position about its secondary axis (SS', TT', UU', W', WW').

5. The maneuvering device as claimed in claim 3 or claim 4, in which the locking disk (22) includes a recess (221)-disposed radially in line with the axial shaft (211), in such a manner as to allow the pivoting of a rocker when the latter changes position.

6. The maneuvering device as claimed in any one of claims 1 to 5, in which the mechanical transmission means connecting a rocker to one or more flaps are formed by:
- a set of links (31, 311, 32, 32a, 321, 322) connecting the body of the rocker to the rotation shaft or to a rear face of the flap orflaps,
- a flexible cable transmission of push/pull type,
- a system of gears

7. The maneuvering device as claimed in any one of claims 1 to 6, in which each rocker (23, 24, 25, 26, 27) successively occupies a number of fixed positions equal to the number of semicircular recesses (231, 232, 241, 242, 251, 252, 253, 261, 262, 263, 271, 272, 273) that it supports, so that it is possible to dispose the flaps (10, 11, 12) successively in a plurality of particular fixed positions to adjust the quantity of air reaching the cooling means

8. The maneuvering device as claimed in any one of claims 1 to 7, in which, when the drive wheel (21) effects a rotation of one turn, each of the rockers (23, 24, 25, 26, 27) effects, in accordance with a-sequence imposed by the direction of rotation of the drive wheel, a movement of rotation from one position to another position adjacent to the-preceding position.

9. The maneuvering device as claimed in any one of claims 1 to 8, in which each rocker (23, 24, 25, 26, 27) successively occupies each of the possible positions-when the drive wheel (21) has effected as many turns on itself as the number of radial slots supported by a rocker.

10. **XX') shaft, and resulting from the aerodynamic forces exerted on the flap or flaps (1,** 11, 12) connected to said rocker when the vehicle is in motion, is substantially zero.

11. The maneuvering device as claimed in any one of claims 1 to 10, in which the drive wheel (21) is rotated by a motor (40) coupled to a gearbox (41).

12. The device as claimed in any one of claims 1 to 11, in which the rotation of the drive wheel (21) may be interrupted between the change of position of two rockers (23, 24, 25, 26, 27) circumferentially placed in adjacent positions, so that some of the flaps are in a position different from the position of others.

13. The device as claimed in any one of claims 1 to 11, in which the rotation of the drive wheel (21) may be interrupted between the change of position of two rockers (23, 24, 25, 26, 27) circumferentially placed in adjacent positions, so that some of the flaps are in a position different from the position of others.
